(19) Europäisches Patentamt
European Patent Office
Office européen des brevets

(11) Veröffentlichungsnummer: **0 197 022**
**B1**

(12) **EUROPÄISCHE PATENTSCHRIFT**

(45) Veröffentlichungstag der Patentschrift: **16.05.90**

(21) Anmeldenummer: **86890059.8**

(22) Anmeldetag: **13.03.86**

(51) Int. Cl.⁵: **C 08 G 18/69,** C 08 F 4/04, C 08 F 36/04, C 08 G 18/62

(54) **Verfahren zur Herstellung von hydroxytelechelen Polymeren und deren Verwendung als Bestandteil von Polyurethanelastomeren.**

(30) Priorität: **15.03.85 AT 770/85**

(43) Veröffentlichungstag der Anmeldung:
**08.10.86 Patentblatt 86/41**

(45) Bekanntmachung des Hinweises auf die Patenterteilung:
**16.05.90 Patentblatt 90/20**

(84) Benannte Vertragsstaaten:
**BE CH DE FR GB IT LI LU NL SE**

(56) Entgegenhaltungen:
**DE-A-2 518 622**
**FR-A-2 170 546**

**Jr Progr Org Coat 7 (1979)**
**Angew. Makromol. Chem. 70, 9 (1979)**

**Die Akte enthält technische Angaben, die nach dem Eingang der Anmeldung eingereicht wurden und die nicht in dieser Patentschrift enthalten sind.**

(73) Patentinhaber: **LIM Kunststoff-Technologie Gesellschaft m.b.H.**
**A-2421 Kittsee (AT)**

(72) Erfinder: **Dworczak, Renate**
**Muchargasse 26**
**A-8010 Graz (AT)**
Erfinder: **Trathnigg, Bernd**
**Gartenstadstrasse 74**
**A-8010 Graz (AT)**
Erfinder: **Junek, Hans**
**Herrandgasse 22**
**A-8010 Graz (AT)**
Erfinder: **Schmidt, Andreas**
**Hauergasse 12**
**A-2410 Hainburg (AT)**

(74) Vertreter: **Collin, Hans, Dipl.-Ing. Dr. et al**
**Patentanwälte Dipl.-Ing. Dr. Hans Collin Dipl.-Ing. Erwin Buresch Dipl.-Ing. Dr. Helmut Wildhack Dipl.-Ing. Armin Häupl Mariahilfer Strasse 50**
**A-1070 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 197 022 B1

**Beschreibung**

Die Erfindung betrifft ein Verfahren zur Herstellung von Polyurethanen, insbesondere von Polyurethanelastomeren, unter Verwendung von Diolen und Diisocyanaten sowie gegebenenfalls Kettenverlängerern, das vor allem dadurch gekennzeichnet ist, daß als Diole Oligo- bzw. Polymere äthylenisch ungesättigter Monomere mit zumindest einer endständigen

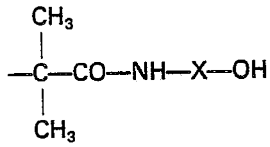 Gruppe,

in der X eine geradkettige oder verzweigte Alkylengruppe mit 2 bis 12 C-Atomen bedeutet, eingesetzt werden. Nach einem weiteren Kennzeichen werden Diole mit einer Hydroxylfunktionalität in der Nähe von 2, vorzugsweise von 1,9 bis 2,1 eingesetzt.

Grundsätzlich ist bekannt, daß man durch radikalische Polymerisation von äthylenisch ungesättigten Monomeren Polymere oder Oligomere mit beidseitigen funktionellen Endgruppen, sogenannte telechele Polymere bzw. Oligomere, erhalten kann, wenn man die Monomeren mit diese Endgruppen liefernden Anregern (Initiatoren) polymerisiert. Diese Polymere bzw. Oligomere sind von großer Bedeutung, u.a. zur Herstellung von Polyurethanen.

In diesem Zusammenhang wurde bereits angegeben, daß bei derartigen Anregern neben solchen mit Carboxylgruppen vor allem solche mit Hydroxylgruppen technisch interessant sind (H. Schnecko, G. Degler, H. Dongowsky, R. Caspary, G. Angerer, T. S. Ng, Angew. Makromol. Chem.70,9 (1978); R. D. Athey, Jr., Progr. Org. Coat. 7,289 (1979)).

Als derartige Anreger verwendete hydroxylgruppenhaltige Azoverbindungen der Formel

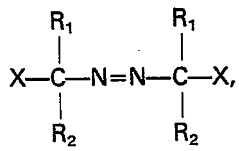

in der X jeweils eine eletronenanziehende Gruppe (z.B. CN oder COOH) ist und die Hydroxylgruppen in $R_1$ oder $R_2$ enthalten oder mit X verknüpft sind, sind durch S. F. Reed, J. Polym. Sci., Part A-1,2,2029 (1971); N. D. Ghatge, S. P. Vernekar, P. P. Wadgaonkar, J. Polym. Sci., Polym. Chem. Ed. 21,3591 (1983); B. B. Idage, sowie durch S. P. Vernekar und N. D. Ghatge, ibid. 21,385 (1983) beschrieben.

Die US—PS 4,272,435 beschreibt ähnliche symmetrische Azoanreger der Formel

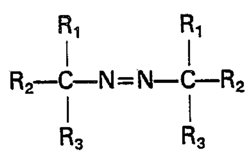

in der $R_1$ und $R_2$ jeweils gegebenenfalls mit Carboxyl-, Hydroxyl- oder Alkoxygruppen substituierte $C_1$—$C_8$ Alkylgruppen, $C_3$—$C_8$ alizyklische Kohlenwasserstoff-Gruppen, $C_6$—$C_{10}$ aromatische Kohlenwasserstoff-Gruppen oder $C_4$—$C_{12}$ alizyklische Kohlenwasserstoff-Gruppen sind, wobei die Alizyklen durch Verknüpfung von $R_1$ und $R_2$ mit dem benachbarten C-Atom gebildet sind. $R_3$ sind jeweils Nitrilgruppen, $C_1$—$C_4$-alkanester-Gruppen, Alkali- oder Erdalkalicarboxylat-Gruppen oder Carboxylamino-Gruppen.

Azoanreger in Form von Azo-bis-N,N'-isobuttersäuredialkylestern sind in der US—PS 4,290,945 und der DE—OS 21 24 000 beschrieben. Zu deren Herstellung wird das ebenfalls als technisch wichtiger Azoanreger Porofor N bekannte Azo-bis-N,N'-isobuttersäurenitril mit Monoalkanolen (US—PS) bzw. mit Alkandiolen (DE—OS) umgesetzt, sodaß die Ester gemäß der DE—OS 21 24 000 endständige Hydroxylgruppen aufweisen.

Azoanreger mit endständigen —SH-Gruppen sind in der DE—OS 25 18 622 beschrieben. Diese Azoanreger haben die allgemeine Formel

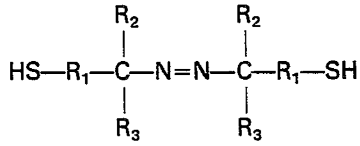

in der $R_1$ jeweils für bifunktionelle organische Reste und $R_2$ und $R_3$ jeweils für gleiche oder verschiedene organische Reste, die gegebenenfalls zu einem Ring verbunden sind, bedeuten.

Diese Merkaptoverbindungen können nach der DE—OS 25 18 622 z.B. durch Veresterung von Azo-bis-N,N'-hydroxyalkylamiden mit Mercaptocarbonsäuren erhalten werden, und bezüglich der Ausgangsmaterialien ist angegeben, daß Azo-bis-N,N'-isobuttersäurehydroxyalkylamide durch Aminolyse des bekannten Azo-bis-N,N'-isobuttersäuremethyl- oder äthylesters mit Aminoalkoholen leicht zugänglich sind.

Ebenfalls sind in der FR—PS 2 170 546 (DE—OS 2 164 313) symmetrische Azoanreger, nämlich solche der Formel

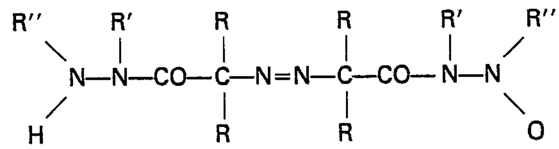

beschrieben, in der R ein Alkyl mit 1—4 C-atomen, R' Wasserstoff oder ein Alkyl mit 1—4 C-atomen und R'' Wasserstoff, ein Alkyl mit 1—4 C-atomen oder ein gegebenenfalls substituiertes Phenyl ist.

Werden damit hergestellte Polyenhydrazide, z.B. Polybutadienhydrazid mit Isocyanaten zu Polyurethanen umgesetzt, so zeigt sich, daß diese Hydrazide jeweils mit mehr als zwei Isocyanatgruppen reagieren, wobei rasch fest werdende Produkte entstehen. Mit diesen Hydraziden ist es nicht möglich, haltbare Präpolymere herzustellen, was aber zur Bildung von Polyurethanformkörpern mit gleichmäßigem Aufbau nötig ist.

Es wurde gefunden, daß Azo-bis-N,N'-isobuttersäurehydroxyalkylamide der allgemeinen Formel

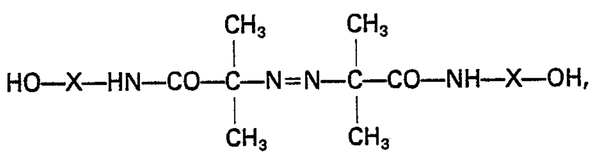 (1)

in der X eine geradkettige oder verzweigte Alkylengruppe mit 2 bis 12 C-Atomen darstellt, als Azoanreger für die Polymerisation von üblichen äthylenisch ungesättigten Monomeren besonders geeignet ist.

Es können damit hydroxytelechele Polymere bzw. Oligomere von hoher Einheitlichkeit und insbesondere mit einer Hydroxyl-Funktionalität im Bereich von 2 (im allgemeinen von 1,9 bis 2,1) erhalten werden, die ausgezeichnete Ausgangsmaterialien zur Herstellung von Polyurethanen, insbesondere Polyurethanelastomeren sind. Vor allem können damit auch stabile Präpolymere gebildet werden.

Als übliche äthylenisch ungesättigte Monomere werden z.B. 1,3-Butadien, Isopren und Chloropren eingesetzt, wobei eine Homo- bzw. Copolymerisation durchgeführt werden kann. Als Comonomere eignen sich u.a. Styrol bzw. dessen Abkömmlinge, z.B. Methylstyrol, sowie Acrylsäureabkömmlinge, z.B. Acrylnitril.

Die über die hydroxytelechelen Polymere bzw. Oligomere der äthylenisch ungesättigten Monomere erhaltenen Elastomere weisen hohe Kälteflexibilität und hohe Hydrolysebeständigkeit auf, die mit den bisher eingesetzten Anregern, insbesondere solchen, die Estergruppen liefern, nicht erzielbar sind. Weiterhin können diese Elastomere vorteilhaft hoch gefüllt werden, z.B. mit Ruß oder $SiO_2$, wobei auch ohne Kettenverlängerer ausgezeichnete physikalische Eigenschaften resultieren.

Die radikalische Polymerisation der äthylenisch ungesättigten Monomeren mit den Azo-bis-N,N'-isobuttersäurehydroxyalkylamiden der Formel I erfolgt in üblicher Weise, ebenso die Weiterverarbeitung der dabei gebildeten hydroxytelechelen Polymeren bzw. Oligomeren zusammen mit (Di)isocyanaten und gegebenenfalls Kettenverlängerern. Die Kettenverlängerer sind ebenfalls übliche Stoffe, als Beispiel für einen aminogruppenhaltigen Kettenverlängerer wird MOCA (4,4'-Methylen-bis-(2-Chloranilin)) genannt.

Die erfindungsgemäß als Anreger eingesetzten Verbindungen der Formel I können, wie bekannt, durch Aminolyse von Azo-bis-N,N'-isobuttersäurealkylestern mit Aminoalkanolen erhalten werden. Diese Alkylester mit geradkettigen oder verzweigten Alkylgruppen sind gut zugängliche Verbindungen (J. Thiele, K. Heuser, Liebigs Ann. Chem. 290, 1 (1896)) und werden mit geradkettigen oder verzweigten Alkanolen mit bis zu 6 C-Atomen umgesetzt.

Vorteilhaft werden dazu die Azo-bis-N,N'-isobuttersäure-niederalkylester, vorzugsweise der Methyl- oder Äthylester, mit den Aminoalkoholen bei Temperaturen zwischen 0 und 60°C in einem Lösungsmittel, das überschüssiger Aminoalkohol oder ein polares organisches Lösungsmittel, vorzugsweise ein geradkettiger oder verzweigter Alkohol mit 1—6 Kohlenstoffatomen, sein kann, in Gegenwart eines basischen Katalysators oder ohne einen solchen, vorzugsweise mit einem Alkali- oder Erdalkaliamid oder einem Alkali- oder Erdalkalialkoholat eines niederen aliphatischen Alkohols, umgesetzt. Die Alkoholate können hiebei bereits als solche in die Reaktion eingebracht oder durch Auflösen des Metalls oder eines Metallhydrids im Alkohol in situ hergestellt werden. Je nach der Reaktionstemperatur betragen die Reaktionszeiten für die Aminolyse zwischen 1 und 72 Stunden, vorzugsweise etwa 6 Stunden.

Die Erfindung wird nachstehend an Hand von Herstellungsbeispielen für die Azoanreger und Ausführungsbeispielen näher beschrieben.

Herstellungsbeispiel 1:

Zu einer Lösung von 0.1 g (4.3 mMol) Natrium in 10 ml Methanol werden 2,4 g (39,2 mMol) 2-Aminoethanol und 5.0 g (19.36 mMol) Azo-bis-isobuttersäure-diethylester zugegeben. Das Reaktionsgemisch wird 20 Stunden bei 25°C gerührt, dann wird das ausgefallene Produkt abgesaugt, mit wenig Petrolether (Kp. 40—60°C) gewaschen und im Vakuum getrocknet.

Ausbeute: 5,0 g, durch weitere Zugabe von 2 Aminoethanol zur Mutterlauge kann nach längeren Reaktionszeiten nahezu quantitative Ausbeute erreicht werden.

Das Rohprodukt fällt in genügender Reinheit an, sodaß es direkt als Anreger eingesetzt werden kann. Für analytische Zwecke kann vorsichtig aus Methanol umkristallisiert werden (über 80°C beginnt die Stickstoffabspaltung).

| | | | | |
|---|---|---|---|---|
| $C_{12}H_{24}N_4O_4$ (288.3) | Ber.: | C 49.90 | H 8.39 | N 19.43 |
| | Gef.: | C 49.88 | H 8.41 | N 19.37 |

IR (in KBr, $cm^{-1}$): 3390, 3330 (NH-Valenz), 3010, 2990, 2940, 2880 (CH-Valenz), 1660, 1530
$^1H$—NMR ($CDCl_3$, δ, ppm): 1.31 (s, 12H, $CH_3$); 3.29 (m.8H, $CH_2$—); 4.17 (s, 2H, .OH); 7.44 (breites, 2H, —NH)

Herstellungsbeispiel 2:

0.99 g Lithiumamid (0,43 mMol) werden in 10 ml 2-Aminoethanol gelöst, dann werden 5,0 g (21,7 mMol) Azo-bis-isobuttersäuredimethylester zugegeben und die Lösung 56 Stunden bei 30°C gerührt. Dann wird das ausgefallene Produkt abgesaugt, mit wenig Petrolether gewaschen und im Vakuum getrocknet. Ausbeute: 3,2 g (51% d.Th.)

Ausführungsbeispiel 1:

3,0 g (10,4 mMol) Azo-bis-isobuttersäure-di-2-hydroxyethyl-amid (V) in 10 ml Methanol und 10,0 g (184,9 mMol) Butadien-1,3 werden in einem verschlossenen Gefäß 24 Stunden auf 70°C erhitzt. Nach dem Abkühlen werden noch 30 ml Methanol zugegeben und das ausgefallene hydroxyterminierte Polybutadien abgetrennt. Mittels Gelchromatographie wurden folgende Molekulargewichte gefunden:

$$M_w = 4173$$

$$M_n = 3382$$

$$M_w/M_n = 1,23$$

Mit Hilfe der $^1H$—NMR-Spektroskopie wurde eine mittlere Funktionalität von

$$F = 2,05$$

gefunden.

Ausführungsbeispiel 2:

In einem 5 1-Rührreaktor werden 750 g (13,87 Mol) Butadien, 250 g (2,11 Mol) Vinyltoluol und 150 g (0,52 Mol) Azo-bis-isobuttersäure-di-2-hyudroxyethylamid in 1 kg Methanol 24 Stunden bei 85°C gerührt. Nach dem Abkühlen wird das ausgefallene Polymer abgetrennt, mit 1 kg Methanol bei Raumtemperatur 30 min gerührt und nach der Abtrennung im Vakuum bei 40°C getrocknet. Das so erhaltene Produkt (700 g) hat ein Molekulargewicht (mittels GPC bestimmt) von

$$M_w = 8219 \text{ und } M_n = 3480$$

und eine Uneinheitlichkeit von

$$M_w/M_n = 2.361$$

Ausführungsbeispiel 3:

Nach der Vorgangsweise nach Ausführungsbeispiel 2 wird ein Ansatz aus 750 g (13,87 Mol) Butadien, 250 g (2,40 Mol) Styrol und 50 g (0,17 Mol) Azo-bis-isobuttersäure-di-hydroxyethylamid in 1 kg Methanol verarbeitet. Das erhaltene Produkt (194 g) hat ein Molekulargewicht von

$$M_w = 9594 \qquad M_n = 3876$$

sowie eine Uneinheitlichkeit von

$$M_w/M_n = 2.475$$

Ausführungsbeispiel 4:

Nach der Vorgangsweise nach Ausführungsbeispiel 2 wird ein Ansatz aus 750 g (13,87 Mol) Butadien, 250 g (4,71 Mol) Acrylnitril, 100 g (0,34 Mol) Azo-bis-isobuttersäure-di-hydroxyethyl-amid in 1 kg Methanol verarbeitet. Reaktionszeit: 24 Stunden. Das so erhaltene Produkt hat ein Molekulargewicht (mittels GPC bestimmt) von

$$M_w = 8410 \text{ und } M_n = 4339$$

sowie eine Uneinheitlichkeit von

$$M_w/M_n = 1.938$$

Ausführungsbeispiel 5:

Ausführungsbeispiel 4 wird mit 120 Stunden Reaktionszeit wiederholt. Das so erhaltene Produkt hat ein Molekulargewicht (mittels GPC bestimmt) von

$$M_w = 15008 \text{ und } M_n = 5529$$

sowie eine Uneinheitlichkeit von

$$M_w/M_n = 2.714$$

Ausführungsbeispiel 6:

Nach der Vorgangsweise nach Ausführungsbeispiel 2 wird ein Ansatz aus 565 g (9,72 Mol) Butadien, 225 g (2,25 Mol) Ethylacrylat und 60 g (0,21 Mol) Azo-bis-isobuttersäure-di-hydroxyethylamid in 1 kg Ethanol verarbeitet. Reaktionszeit: 40 Stunden. Das so erhaltene Produkt hat ein Molekulargewicht (mittels GPC bestimmt) von

$$M_w = 5810 \text{ und } M_n = 3361$$

sowie eine Uneinheitlichkeit von

$$M_w/M_n = 1.729$$

Ausführungsbeispiel 7:

2087 g (0,5 Mol) nach Ausführungsbeispiel 1 hergestelltes, hydroxyterminiertes Polybutadien knetet man in einem Innermischer bei einer Temperatur von ca. 50°C mit 1544 g Ruß der Type ISAF erst 30 Minuten unter Normaldruck und anschließend 4 Stunden unter Vakuum von <10 mm Hg. Nach dieser Zeit ist der Ruß ausreichend dispergiert. Anschließend wird das Vakuum mit Stickstoff gebrochen, die Mischung auf 30°C abgekühlt, mit 95,8 g (0,55 Mol) 2,4-Toluylendiisocyanat versetzt und im Vakuum bei 30°C 20 Minuten vermischt. Die so erhaltene viskose Paste wird, wie im Brit.Patent 1437007 beschrieben, zur Lauffläche eines gegossenen Reifens der Dimension 165 SR 13 verarbeitet.

Ausführungsbeispiel 8:

2087 g (0,5 Mol) nach Ausführungsbeispiel 1 erhaltenes, hydroxyterminiertes Polybutadien werden im Vakuum bei 100°C 1 Stunde gerührt, auf 80°C abgekühlt und nach Brechen des Vakuums mit Stickstoff mit 261,2 g (1,5 Mol) 2,4-Toluylendiisocyanat versetzt. Die Mischung wird unter Feuchtigkeitsausschluß 2 Stunden bei 80°C gerührt, evakuiert, mit Stickstoff das Vakuum gebrochen und eine kleine Menge (ca. 2 g) zur Bestimmung des Isocyanatgehaltes verwendet. Das so erhaltene Prepolymer hat einen Isocyanatgehalt von ca. 3,55%. Dieses Prepolymer kann zur endgültigen Elastomerherstellung mit verschiedenen in der Polyurethanherstellung verwendeten aromatischen Diaminen vernetzt werden.

Ausführungsbeispiel 9:

100 g nach Ausführungsbeispiel 8 erhaltenes Prepolymer werden mit 10,7 g (0,04 Mol) geschmolzenem 4,4'-Methylen-bis-(2-chloranilin) innig vermischt und in eine Plattenform von 100°C gegossen. Die Elastomermischung wird 5 Stunden bei 100°C gehalten. Man erhält so ein Polyurethanelastomer, das auf Grund der speziellen Zusammensetzung seines Weichsegmentes besonders hydrolysestabil ist und sich durch seine Kälteflexibilität auszeichnet. Deshalb ist es zur Herstellung von Korpusmaterial für gegossene Polyurethanreifen, wie im Brit. Pat. 1437007 beschrieben, besonders gut geeignet.

Ausfuhrungsbeispiel 10:

33,8 g (= 0,01 Mole) nach Ausführungsbeispiel 1 hergestelltes hydroxyterminiertes Polybutadien werden mit 3,48 g (= 0,014 Mole) Baytec® 1604[1]) vermischt und zwei Stunden lang bei 70°C im Vakuum entgast. Dann bricht man das Vakuum mit Stickstoff und läßt unter Stickstoff auf etwa 40°C abkühlen. Anschließend werden 4,8 g (=0,0276 Mole) 2,4-Toluylendiisocyanat schnell und gründlich eingerührt.

Die erhaltene Reaktionsmischung wird sofort in auf 100°C vorgewärmte Metallformen gegossen, die verschlossen und zum Aushärten des Materials für 3 Stunden in einen Wärmeschrank mit 100°C gestellt.

Die erhaltenen Testplatten werden nach dem Abkühlen noch 24 Stunden bei Raumtemperatur gelagert und dann den entsprechenden physikalischen Tests unterzogen.

Die Tests liefern folgende Ergebnisse:

---

[1])Baytec® 1604 = 3,5-Diamino-4-chlor-benzoesäure-isobutylester

| | | |
|---|---|---|
| Härte (DIN 53505) | | 86 Shore A |
| Dehnspannung (DIN 53504) | 3% | 0,89 $N/mm^2$ |
| | 5% | 1,13 $N/mm^2$ |
| | 7% | 1,32 $N/mm^2$ |
| | 10% | 1,55 $N/mm^2$ |
| | 100% | 4,43 $N/mm^2$ |
| | 300% | 9,26 $N/mm^2$ |
| Zugfestigkeit (DIN 53504) | | 18,46 $N/mm^2$ |
| Bruchdehnung (DIN 53504) | | 532% |
| Weiterreißfestigkeit (DIN 53515) | 23°C | 31 kN/m |
| | 70°C | 23 kN/m |
| Abrieb (DIN 53516) | | 48 $mm^3$ |

**Patentansprüche**

1. Verfahren zur Herstellung von Polyurethanen, insbesonderen von Polyurethanelastomeren, unter Verwendung von Diolen und Diisocyanaten sowie gegebenenfalls Kettenverlängerern, dadurch gekennzeichnet, daß als Diole Oligo- bzw. Polymere äthylenisch ungesättigter Monomerer mit zumindest einer endständigen

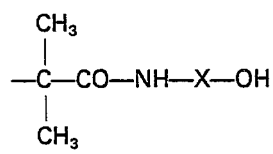 Gruppe,

in der X eine geradkettige oder verzweigte Alkylengruppe mit 2 bis 12 C-Atomen bedeutet, eingesetzt werden.

2. Verfahren nach Anspruch 1, dadurch gekennzeichnet, daß Diole mit einer Hydroxylfunktionalität in der Nähe von 2, vorzugsweise von 1,9 bis 2,1, eingesetzt werden.

**Revendications**

1. Procédé de fabrication de polyuréthanes, en particular d'élastomères de polyuréthanes, en utilisant de diols et diisocyanates ainsi que, le cas échéant, d'étendeurs de chaîne, caractérisé en ce que les diols utilisés sont des oligomères ou polymères de monomères éthylèniquement non saturés avec au moins un groupement en fin de chaîne

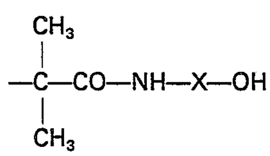

dans lequel X représente un groupe alkylène linéaire ou ramifié avec 2 à 12 atomes de carbone.

2. Procédé selon la revendication 1, caractérisé en ce que les diols ayant une fontionalité hydroxyle voisine de 2, de préférence de 1,9 à 2,1 sont utilisés.

**Claims**

1. A process for the production of polyurethanes, in particular of polyurethane elastomers, with use of diols and diisocyanates as well as optionally chain extenders, characterized in that the diols used are oligomers or polymers of ethylenically unsaturated monomers having at least one terminal

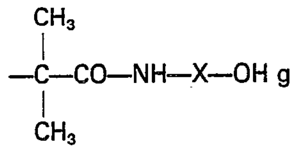 group

wherein X represents a straight or branched alkylene group having 2 to 12 carbon atoms.

2. The process according to claim 1, characterized in that diols having a hydroxyl functionality in the vicinity of 2, preferably of 1.9 to 2.1, are used.